(19) Europäisches Patentamt
European Patent Office
Office européen des brevets

(11) EP 3 638 713 B1

(12) **EUROPEAN PATENT SPECIFICATION**

(45) Date of publication and mention of the grant of the patent:
**02.02.2022 Bulletin 2022/05**

(21) Application number: **18729986.2**

(22) Date of filing: **13.06.2018**

(51) International Patent Classification (IPC):
***C08G 69/14*** *(2006.01)* ***C08G 69/26*** *(2006.01)*
***B29C 64/00*** *(2017.01)*

(52) Cooperative Patent Classification (CPC):
**C08G 69/14; C08G 69/26;** B33Y 70/00

(86) International application number:
**PCT/EP2018/065656**

(87) International publication number:
**WO 2018/229126 (20.12.2018 Gazette 2018/51)**

(54) **POLYAMIDES OBTAINABLE FROM 3-(AMINOALKYL)BENZOIC ACID**

AUS 3-(AMINOALKYL)BENZOESÄURE ERHÄLTLICHE POLYAMIDE

POLYAMIDES POUVANT ÊTRE OBTENUS À PARTIR DE 3-(AMINOALKYL)ACIDE BENZOÏQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.06.2017 US 201762519486 P**
**29.08.2017 EP 17188341**

(43) Date of publication of application:
**22.04.2020 Bulletin 2020/17**

(73) Proprietor: **Solvay Specialty Polymers USA, LLC**
**Alpharetta, Georgia 30005-3914 (US)**

(72) Inventors:
- **JEOL, Stéphane**
  **Cumming**
  **GA 30041 (US)**
- **SINGLETARY, Nancy, J.**
  **Alpharetta**
  **GA 30004 (US)**

(74) Representative: **Fiorucci, Hélène**
**Solvay S.A.**
**Rue de Ransbeek, 310**
**1120 Bruxelles (BE)**

(56) References cited:
**US-A- 5 886 094**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 638 713 B1

## Description

### Technical Field

The present invention relates to polyamides comprising at least 1 mol. % of 3-(aminoalkyl)benzoic acid (3-AABa). The present invention also relates to polymer compositions comprising such polyamides, as well as articles comprising the same and methods of using said articles in automotive applications, LED packaging, electric and electronics devices, mobile electronics, gas barrier packaging, plumbing and oil and gas applications.

### Background Art

A certain number of polyamides such as PA 66, have a melting temperature (Tm) lower than 280°C. The advantage of these polymers compared to polyamides having a melting temperature above 290°C, such as PA 46, is that they have a much broader temperature window for their synthesis and processing in the melt, thereby offering more flexibility and robustness in both synthesis and processing and which often leads to less coloured parts coming from less degradation. These polyamides however generally have a low glass transition temperature (Tg) which limit their use in applications for example requiring a high stiffness at operating temperatures above 140°C such as notably under-the-hood applications in automotive. As an example, PA 66 has a Tm equal to 260°C and a Tg equal to 70°C. Another example is MXD6 having a Tm equal to 240°C and a Tg equal to 85°C.

US5,886,994 relates to a thermoplastic resin composition comprising polyphenylene ether and PA for the use in electronic and/or automotive applications, having a good heat stability, wherein 4-(aminomethyl)benzoic acid and 4-(aminoethyl)benzoic acid are disclosed to be applicable as PA monomers.

The applicant has identified that polyamides derived from 3-(aminoalkyl)benzoic acid (3-AABa) present a high Tg temperature, which make polyamides made therefrom very-well suited for applications requiring a high temperature resistance, as for example for automotive applications.

### Disclosure of the invention

The polyamide of the present invention has the following formula (I) :

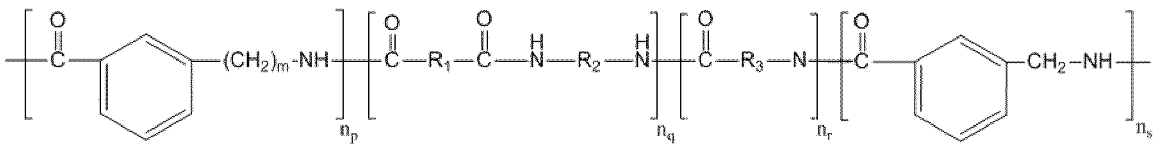

(I)

wherein :

$n_p$, $n_q$, $n_r$ and $n_s$ are respectively the mole % of each recurring units p, q, r and s;
recurring units p, q, r and s are arranged in blocks, in alternation or randomly;

$$n_p + n_q + n_r + n_s = 100;$$

$$1 \leq n_p \leq 100;$$

$$1 < m \leq 20;$$

$R_1$ is selected from the group consisting of a bond, a $C_1$-$C_{15}$ alkyl and a $C_6$-$C_{30}$ aryl, optionally comprising one or more heteroatoms (e.g. O, N or S) and optionally substituted with one or more substituents selected from the group consisting of halogen (e.g. fluorine, chlorine, bromine or iodine), hydroxy (-OH), sulfo ($-SO_3M$) (e.g. wherein M is H, Na, K, Li, Ag, Zn, Mg or Ca), $C_1$-$C_6$ alkoxy, $C_1$-$C_6$ alkylthio, $C_1$-$C_6$ acyl, formyl, cyano, $C_6$-$C_{15}$ aryloxy and $C_6$-$C_{15}$ aryl;

$R_2$ is selected from the group consisting of a $C_1$-$C_{20}$ alkyl and a $C_6$-$C_{30}$ aryl, optionally comprising one or more

heteroatoms (e.g. O, N or S) and optionally substituted with one or more substituents selected from the group consisting of halogen (e.g. fluorine, chlorine, bromine or iodine), hydroxyl (-OH), sulfo ($-SO_3M$) (e.g. wherein M is H, Na, K, Li, Ag, Zn, Mg or Ca), $C_1$-$C_6$ alkoxy, $C_1$-$C_6$ alkylthio, $C_1$-$C_6$ acyl, formyl, cyano, C6-C15 aryloxy and $C_6$-$C_{15}$ aryl; and

$R_3$ is selected from the group consisting of a $C_2$-$C_{20}$ alkyl and a $C_6$-$C_{30}$ aryl, optionally comprising one or more heteroatoms (e.g. O, N or S) and optionally substituted with one or more substituent selected from the group consisting of halogen(e.g. fluorine, chlorine, bromine or iodine), hydroxyl (-OH), sulfo ($-SO_3M$) (e.g. wherein M is H, Na, K, Li, Ag, Zn, Mg or Ca), $C_1$-$C_6$ alkoxy, $C_1$-$C_6$ alkylthio, $C_1$-$C_6$ acyl, formyl, cyano, C6-C15 aryloxy and $C_6$-$C_{15}$ aryl.

According to an embodiment of the present invention, m is such that:

$$1 < m \leq 10; \text{ or}$$

$$1 < m \leq 5; \text{ or}$$

$$m = 2 \text{ or } 3.$$

The expression "polyamide" is hereby used for designating homopolyamides, that-is-to-say composed of recurring units p exclusively, or copolyamides comprising 1 mol. % or more of recurring units p, for example derived from 3-(aminoalkyl)benzoic acid (3-AABa) wherein alkyl is $C_2$-$C_{20}$. The copolyamide of the present invention may for example comprise at least about 1 mol. % of recurring units p, for example derived from 3-(aminoalkyl)benzoic acid (3-AABa), for example at least about 5 mol. %, at least about 10 mol. %, at least about 15 mol. %, at least about 20 mol. %, at least about 25 mol. %, at least about 30 mol. %, at least about 35 mol. %, at least about 40 mol. %, at least about 45 mol. %, at least about 50 mol. %, at least about 55 mol. %, at least about 60 mol. %, at least about 65 mol. %, at least about 70 mol. %, at least about 75 mol. %, at least about 80 mol. %, at least about 85 mol. %, at least about 90 mol. %, at least about 95 mol. % or at least about 98 mol. %.

The polyamides of the present invention may have a number average molecular weight Mn ranging from 1,000 g/mol to 40,000 g/mol, for example from 2,000 g/mol to 35,000 g/mol or from 4,000 to 30,000 g/mol. The number average molecular weight Mn can be determined by gel permeation chromatography (GPC) using ASTM D5296 with polystyrene standards.

In the copolyamide of the present invention, the recurring unit q may be aliphatic or aromatic. For the purpose of the present invention, the expression "aromatic recurring unit" is intended to denote any recurring unit that comprises at least one aromatic group. The aromatic recurring units may be formed by the polycondensation of at least one aromatic dicarboxylic acid with an aliphatic diamine or by the polycondensation of at least one aliphatic dicarboxylic acid with an aromatic diamine, or by the polycondensation of aromatic aminocarboxylic acids. For the purpose of the present invention, a dicarboxylic acid or a diamine is considered as "aromatic" when it comprises one or more than one aromatic group.

In the copolyamide of the present invention, the recurring unit r is aliphatic and $R_3$ is a linear, branched or cyclic $C_2$-$C_{14}$ alkyl, or a $C_6$-$C_{30}$ aryl, optionally comprising one or more heteroatoms (e.g. O, N or S) and optionally substituted with one or more substituents selected from the group consisting of halogen, hydroxy, sulfo, $C_1$-$C_6$ alkoxy, $C_1$-$C_6$ alkylthio, $C_1$-$C_6$ acyl, formyl, cyano, $C_6$-$C_{15}$ aryloxy and $C_6$-$C_{15}$ aryl.

The copolyamide of the present invention may for example be composed of recurring units p and q, or of recurring units p and r, or of recurring units p and s, or of recurring units p, q and s. The recurring units p, q, r and s are arranged in blocks, in alternation or randomly, preferably randomly.

In the present application :

- any description, even though described in relation to a specific embodiment, is applicable to and interchangeable with other embodiments of the present disclosure;
- where an element or component is said to be included in and/or selected from a list of recited elements or components, it should be understood that in related embodiments explicitly contemplated here, the element or component can also be any one of the individual recited elements or components, or can also be selected from a group consisting of any two or more of the explicitly listed elements or components; any element or component recited in a list of elements or components may be omitted from such list; and
- any recitation herein of numerical ranges by endpoints includes all numbers subsumed within the recited ranges as well as the endpoints of the range and equivalents.

Throughout this document, all temperatures are given in degrees Celsius (°C).

Unless specifically limited otherwise, the term "alkyl", as well as derivative terms such as "alkoxy", "acyl" and "alkylthio", as used herein, include within their scope straight chain, branched chain and cyclic moieties. Examples of alkyl groups are methyl, ethyl, 1-methylethyl, propyl, 1,1-dimethylethyl, and cyclo-propyl. Unless specifically stated otherwise, each alkyl and aryl group may be unsubstituted or substituted with one or more substituents selected from but not limited to halogen, hydroxy, sulfo, $C_1$-$C_6$ alkoxy,$C_1$-$C_6$ alkylthio, $C_1$-$C_6$ acyl, formyl, cyano, $C_6$-$C_{15}$ aryloxy or $C_6$-$C_{15}$ aryl, provided that the substituents are sterically compatible and the rules of chemical bonding and strain energy are satisfied. The term "halogen" or "halo" includes fluorine, chlorine, bromine and iodine, with fluorine being preferred.

The term "aryl" refers to a phenyl, indanyl or naphthyl group. The aryl group may comprise one or more alkyl groups, and are called sometimes in this case "alkylaryl"; for example may be composed of a cycloaromatic group and two $C_1$-$C_6$ groups (e.g. methyl or ethyl). The aryl group may also comprise one or more heteroatoms, e.g. N, O or S, and are called sometimes in this case "heteroaryl" group; these heteroaromatic rings may be fused to other aromatic systems. Such heteroaromatic rings include, but are not limited to furanyl, thienyl, pyrrolyl, pyrazolyl, imidazolyl, triazolyl, isoxazolyl, oxazolyl, thiazolyl, isothiazolyl, pyridyl, pyridazyl, pyrimidyl, pyrazinyl and triazinyl ring structures. The aryl or heteroaryl substituents may be unsubstituted or substituted with one or more substituents selected from but not limited to halogen, hydroxy, sulfo, $C_1$-$C_6$ alkoxy,$C_1$-$C_6$ alkylthio, $C_1$-$C_6$ acyl, formyl, cyano, $C_6$-$C_{15}$ aryloxy or $C_6$-$C_{15}$ aryl, provided that the substituents are sterically compatible and the rules of chemical bonding and strain energy are satisfied.

3-(aminoalkyl)benzoic acid (3-AABa) in which alkyl is $C_2$-$C_{20}$ is a monomer which can be derived from furfural, obtained from biomass carbohydrates, such as cellulose, starch, hemicellulose, sugars and the like. Advantageously, the polyamide is at least partially biobased, for example derived from the condensation of a biobased 3-(aminoalkyl)benzoic acid (3-AABa) in which alkyl is $C_2$-$C_{20}$.

According to an embodiment, the copolyamide of the present invention is condensation product of a mixture wherein the copolyamide is the condensation product of a mixture comprising :

- at least 1 mol. % of 3-(aminoalkyl)benzoic acid (3-AABa) of formula (II) :

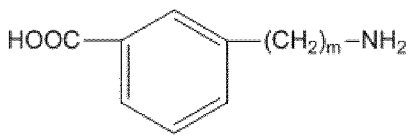

(II)

wherein

$1 < m \leq 20$, preferably $1 < m \leq 10$, more preferably m = 2 or 3 and at least one of the component selected from the group consisting of:

- at least one dicarboxylic acid component or derivative thereof, and at least one diamine component,
- at least one aminocarboxylic acid, and/or
- at least one lactam.

The expression "at least" is hereby intended to denote "equals to or more than". For example, the expression "at least 1 mol. % of

3-AABa monomers" hereby denotes that the copolyamide may comprise 1 mol. % of 3-AABa monomers or more than 1 mol. % of

3-AMBa monomers. The expression "at least" therefore corresponds to the mathematical symbol "≥" in the context of the present invention.

The expression "less than" corresponds to the mathematical symbol "<" in the context of the present invention. For example, the expression "less than 100 mol. % of 3-AABa monomers" hereby denotes that the copolyamide comprises strictly less than 100 mol. % of 3-AABa monomers and therefore qualify as a copolyamide, made from 3-AABa monomers and at least one another monomer or diamine/diacid combination.

The expression "derivative thereof" when used in combination with the expression "3-AABa monomer" is intended to denote whichever derivative which is susceptible of reacting in polycondensation conditions to yield an amide bond. Examples of amide-forming derivatives include acyl groups, for example aliphatic acyl and aromatic acyl groups, substituted or unsubstituted. Examples of these acyl groups are formyl, acetyl, propionyl, butyryl, isobutyryl, valeryl,

isovaleryl, pivaloyl, benzoyl, toluoyl and xyloyl.

According to this embodiment, the dicarboxylic acid component can be chosen among a large variety of aliphatic or aromatic components comprising at least two acidic moieties -COOH. According to this embodiment, the diamine component can be chosen among a large variety of aliphatic or aromatic components comprising at least two amine moieties $-NH_2$.

The expression "derivative thereof" when used in combination with the expression "dicarboxylic acid" is intended to denote whichever derivative which is susceptible of reacting in polycondensation conditions to yield an amide bond. Examples of amide-forming derivatives include a mono- or di-alkyl ester, such as a mono- or di-methyl, ethyl or propyl ester, of such carboxylic acid; a mono- or di-aryl ester thereof; a mono- or di-acid halide thereof; a carboxylic anhydride thereof and a mono-or di-acid amide thereof, a mono- or di-carboxylate salt.

Non limitative examples of aliphatic dicarboxylic acids are notably oxalic acid (HOOC-COOH), malonic acid ($HOOC-CH_2-COOH$), succinic acid [$HOOC-(CH_2)_2-COOH$], glutaric acid [$HOOC-(CH_2)_3-COOH$], 2,2-dimethyl-glutaric acid [$HOOC-C(CH_3)_2-(CH_2)_2-COOH$], adipic acid [$HOOC-(CH_2)_4-COOH$], 2,4,4-trimethyl-adipic acid [$HOOC-CH(CH_3)-CH_2-C(CH_3)_2-CH_2-COOH$], pimelic acid [$HOOC-(CH_2)_5-COOH$], suberic acid [$HOOC-(CH_2)_6-COOH$], azelaic acid [$HOOC-(CH_2)_7-COOH$], sebacic acid [$HOOC-(CH_2)_8-COOH$], undecanedioic acid [$HOOC-(CH_2)_9-COOH$], dodecandioic acid [$HOOC-(CH_2)_{10}-COOH$], tridecanedioic acid [$HOOC-(CH_2)_{11}-COOH$], tetradecanedioic acid [$HOOC-(CH_2)_{12}-COOH$], pentadecanedioic acid [$HOOC-(CH_2)_{13}-COOH$], hexadecanedioic acid [$HOOC-(CH_2)_{14}-COOH$], octadecanedioic acid [$HOOC-(CH_2)_{16}-COOH$]. Included in this category are also cycloaliphatic dicarboxylic acid such as 1,4-cyclohexane dicarboxylic acid.

Non limitative examples of aromatic diacids are notably phthalic acids, including isophthalic acid (IPA), terephthalic acid (TPA), naphthalendicarboxylic acids (e.g. naphthalene-2,6-dicarboxylic acid), 4,4'-bibenzoic acid, 2,5-pyridinedicarboxylic acid, 2,4 pyridinedicarboxylic acid, 3,5-pyridinedicarboxylic acid, 2,2 bis(4 carboxyphenyl)propane, bis(4-carboxyphenyl)methane, 2,2 bis(4 carboxyphenyl)hexafluoropropane, 2,2-bis(4-carboxyphenyl)ketone, 4,4' bis(4-carboxyphenyl)sulfone, 2,2-bis(3-carboxyphenyl)propane, bis(3 carboxyphenyl)methane, 2,2-bis(3-carboxyphenyl)hexafluoropropane, 2,2 bis(3-carboxyphenyl)ketone, bis(3-carboxyphenoxy)benzene.

Non limitative examples of aromatic diamines (NNar) are notably m-phenylene diamine (MPD), p-phenylene diamine (PPD), 3,4'-diaminodiphenyl ether (3,4' ODA), 4,4'-diaminodiphenyl ether (4,4'-ODA), p-xylylene diamine (PXDA) and m-xylylenediamine (MXDA).

Non limitative examples of aliphatic diamines (NNal) are notably 1,2 diaminoethane, 1,2-diaminopropane, propylene-1,3-diamine, 1,3 diaminobutane, 1,4-diaminobutane (putrescine), 1,5-diaminopentane (cadaverine), 2-methyl-1,5-diaminopentane, hexamethylenediamine (or 1,6-diaminohexane), 3-methylhexamethylenediamine, 2,5 dimethylhexamethylenediamine, 2,2,4-trimethyl-hexamethylenediamine, 2,4,4-trimethyl-hexamethylenediamine, 1,7-diaminoheptane, 1,8-diaminooctane, 2,2,7,7-tetramethyloctamethylenediamine, 1,9-diaminononane, 2-methyl-1,8-diaminooctane, 5-methyl-1,9-diaminononane, 1,10-diaminodecane, 1,11-diaminoundecane, 1,12 diaminododecane, 1,13 diaminotridecane, 2,5-diamonotetrahydrofurane and N,N-Bis(3-aminopropyl)methylamine. Included in this category are also cycloaliphatic diamine, such as isophorone diamine, 1,3-diaminocyclohexane, 1,4-diaminocyclohexane, bis-p-aminocyclohexylmethane, 1,3-bis(aminomethyl)cyclohexane and 1,4-bis(aminomethyl)cyclohexane.

The aliphatic diamines (NNal) can also be selected in the group of polyetherdiamines. The polyetherdiamines can be based on an ethoxylated (EO) backbone and/or on a propoxylated (PO) backbone and they can be ethylene-oxide terminated, propylene-oxide terminated or butylene-oxide terminated diamines. Such polyetherdiamines are for example sold under the trade name Jeffamine® and Elastamine® (Hunstman).

According to an embodiment of the present invention, the copolyamide comprises at least one aminocarboxylic acid (recurring unit r), and/or at least one lactam (recurring unit r).

The aminocarboxylic acid may have from 3 to 15 carbon atoms, for example from 4 to 13 carbon atoms. According to an embodiment, the aminocarboxylic acid is selected from the group consisting of 6-aminohexanoic acid, 9-aminononanoic acid, 10-aminodecanoic acid, 11-aminoundecanoic acid, 12-aminododecanoic acid, 13-aminotridecanoic acid and mixture thereof.

The lactam may have from 3 to 15 carbon atoms, for example from 4 to 13 carbon atoms. According to an embodiment, the lactam is selected from the group consisting of caprolactam, dodecanolactam and mixture thereof.

According to an embodiment, the copolyamide is the condensation product of a mixture comprising :

- at least 1 mol. % of 3-(aminoalkyl)benzoic acid (3-AABa) of formula (II) or derivative thereof:

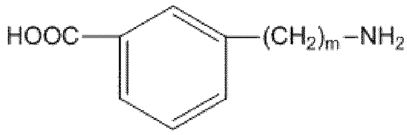

(II)

wherein
$1 < m \leq 20$, preferably $1 < m \leq 10$, more preferably m = 2 or 3 and at least one of the component selected from the group consisting of :

- at least one dicarboxylic acid component or derivative thereof, and at least one diamine component,
- at least one aminocarboxylic acid, and/or
- at least one lactam.

According to an embodiment of the present invention, the copolyamide comprises 3-(aminomethyl)benzoic acid monomers (3-AMBa) (recurring units).

As described in co-pending patent application filed under number PCT/CN2016/108997 on December 8, 2016, 3-(aminomethyl)benzoic acid (3-AMBa) is a monomer which can also be derived from furfural, obtained from biomass carbohydrates, such as cellulose, starch, hemicellulose, sugars and the like.

According to an embodiment, the copolyamide of the present invention is the condensation product of a mixture comprising :

- 3-(aminoalkyl)benzoic acid (3-AABa) of formula (II) or derivative thereof:

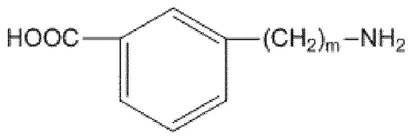

(II)

wherein
$1 < m \leq 20$, preferably $1 < m \leq 10$, more preferably m = 2 or 3, and
- 3-(aminomethyl)benzoic acid (3-AMBa).

According to an embodiment, the copolyamide of the present invention is at least partially biobased, for example totally biobased.

According to an embodiment, the copolyamide is the condensation product of a mixture comprising :

- at least 1 mol. % of 3-(aminoalkyl)benzoic acid (3-AABa) of formula (II) or derivative thereof,
- the dicarboxylic acid component is selected from the group consisting of adipic acid, azelaic acid, sebacic acid, isophthalic acid, terephthalic acid, 2,6-naphthalene dicarboxylic acid, 4,4'-bibenzoic acid, 5-hydroxyisophthalic acid, 5-sulfophthalic acid, and mixture thereof, and - the diamine component is selected from the group consisting of 1,4-diaminobutane, 1,5-diamonopentane, 2-methyl-1,5diaminopentane, hexamethylenediamine, 1,9-diaminononane, 2-methyl-1,8-diaminooctoane, 1,10-diaminedecane, $H_2N-(CH_2)_3-O-(CH_2)_2-O(CH_2)_3-NH_2$, *m*-xylylene diamine, p-xylylene and mixture thereof.

According to another embodiment of the present invention, the copolyamide is the condensation product of a mixture comprising :

- at least 1 mol. % of 3-(aminoalkyl)benzoic acid (3-AABa) of formula (II) or derivative thereof,
- the dicarboxylic acid component is selected from the group consisting of adipic acid, terephthalic acid, isopthalic acid and mixture thereof, and
- the diamine component is selected from the group consisting of hexamethylenediamine, *m*-xylylene diamine, 1,10-decamethylene diamine and mixture thereof.

According to another embodiment, the copolyamide is the condensation product of a mixture comprising :

- at least 1 mol. % of 3-(aminoalkyl)benzoic acid (3-AABa) of formula (II) or derivative thereof, and
- at least one lactam selected from the group consisting of caprolactam, dodecanolactam and mixture thereof.

The polyamide of the present invention comprises at least 1 mol. % of 3-(aminoalkyl)benzoic acid (3-AABa) monomers or derivative thereof.

According to another preferred embodiment, the copolyamide comprises at least 50 mol. % of 3-(aminoalkyl)benzoic acid (3-AABa) monomers or derivative thereof, for example at least 60 mol. %, at least 70 mol. %, at least 75 mol. % of 3-AABa or derivative thereof. According to this embodiment, the copolyamide is such that:

$$50 \leq n_p \leq 100,$$

$$60 \leq n_p \leq 100,$$

$$70 \leq n_p \leq 100 \text{ or}$$

$$80 \leq n_p \leq 100.$$

The polyamide of the present invention comprises about 100 mol. % of 3-(aminoalkyl)benzoic acid (3-AABa) monomers or derivative thereof, wherein alkyl is $C_2$-$C_{20}$. The copolyamide of the present invention may comprise several distinct 3-(aminoalkyl)benzoic acid (3-AABa) monomers or derivative thereof, for example 2 or 3 distinct 3-AABa monomers.

The copolyamide of the present invention comprises less than 100 mol. % of 3-(aminoalkyl)benzoic acid (3-AABa) monomers or derivative thereof.

According to another preferred embodiment, the copolyamide comprises less than 99 mol. % of 3-(aminoalkyl)benzoic acid (3-AABa) monomers or derivative thereof, for example less than 98 mol. %, less than 97 mol. %, less than 96 mol. % of 3-AABa. According to this embodiment, the copolyamide is such that:

$$5 \leq n_p \leq 99,$$

$$5 \leq n_p \leq 98,$$

$$5 \leq n_p \leq 97 \text{ or}$$

$$5 \leq n_p \leq 96.$$

$n_p$, $n_q$, $n_r$ and $n_s$ are respectively the moles % of each recurring units p, q, r and s. As an example of the different embodiments of the present invention, if the copolyamide of the present invention is composed exclusively of recurring units p and q, then $n_p + n_q = 100$ and $n_r$ and $n_s$ =0. In this case, the recurring unit q is composed of a diamine component and a diacid component; the number of moles of diamines and the number of moles of diacids to be added to the condensation reaction are equal.

According to an embodiment, the copolyamide of the present invention has a glass transition temperature (Tg) of at least about 90°C, as determined according to ASTM D3418. According to this embodiment, the copolyamide of the present invention may have for example a melting point of at least about 95°C, at least about 100°C or at least about 105°C.

According to an embodiment, the copolyamide of the present invention has a melting temperature (Tm) of at least about 200°C, as determined according to ASTM D3418. According to this embodiment, the copolyamide of the present invention may have for example a melting temperature (Tm) of at least about 210°C, at least about 215°C, at least about 220°C or at least about 225°C.

According to an embodiment of the present invention, the copolyamide is semi-crystalline and is the condensation product of a mixture comprising at least 80 mol. % of 3-(aminoethyl)benzoic acid (3-AEBa), and at least one of the component selected from the group consisting of :

- at least one dicarboxylic acid component or derivative thereof, and at least one diamine component,
- at least one aminocarboxylic acid, and/or
- at least one lactam.

According to an embodiment, the copolyamide presents a biobased content higher than 50 % (or higher than 60 %, higher than 70 %, higher than 80 % or even higher than 90 %) according to ASTM 6866, that is to say the % of carbon atoms from renewable sources.

The copolyamide of the present invention can be prepared by any conventional method adapted to the synthesis of polyamides and polyphthalamides, for example by thermal polycondensation of aqueous solution of monomers and comonomers. The copolyamides may contain a chain limiter, which is a monofunctional molecule capable of reacting with the amine or carboxylic acid moiety, and is used to control the molecular weight of the copolyamide. For example, the chain limiter can be acetic acid, propionic acid and/or benzylamine. A catalyst can also be used. Examples of catalyst are phosphorous acid, ortho-phosphoric acid, metaphosphoric acid, alkali-metal hypophosphite such as sodium hypophosphite and phenylphosphinic acid.

Polyamide composition (C)

The polyamide composition (C) comprises the polyamides of the present invention, above described.

The polyamides may be present in the composition (C) in a total amount of greater than 30 wt. %, greater than 35 wt. % by weight, greater than 40 wt. % or greater than 45 wt. %, based on the total weight of the polymer composition (C).

The polyamides may be present in the composition (C) in a total amount of less than 90 wt. %, less than 80 wt. %, less than 70 wt. % or less than 60 wt. %, based on the total weight of the polymer composition (C).

The polyamides may for example be present in the composition (C) in an amount ranging between 35 and 60 wt. %, for example between 40 and 55 wt. %, based on the total weight of the polyamide composition (C).

The composition (C) may also comprise one component selected from the group consisting of reinforcing agents, tougheners, plasticizers, colorants, pigments, antistatic agents, dyes, lubricants, thermal stabilizers, light stabilizers, flame retardants, nucleating agents and antioxidants.

A large selection of reinforcing agents, also called reinforcing fibers or fillers, may be added to the composition according to the present invention. They can be selected from fibrous and particulate reinforcing agents. A fibrous reinforcing filler is considered herein to be a material having length, width and thickness, wherein the average length is significantly larger than both the width and thickness. Generally, such a material has an aspect ratio, defined as the average ratio between the length and the largest of the width and thickness of at least 5, at least 10, at least 20 or at least 50.

The reinforcing filler may be selected from mineral fillers (such as talc, mica, kaolin, calcium carbonate, calcium silicate, magnesium carbonate), glass fibers, carbon fibers, synthetic polymeric fibers, aramid fibers, aluminum fibers, titanium fibers, magnesium fibers, boron carbide fibers, rock wool fibers, steel fibers and wollastonite.

Among fibrous fillers, glass fibers are preferred; they include chopped strand A-, E-, C-, D-, S- and R-glass fibers, as described in chapter 5.2.3, p. 43-48 of Additives for Plastics Handbook, 2nd edition, John Murphy. Preferably, the filler is chosen from fibrous fillers. It is more preferably a reinforcing fiber that is able to withstand the high temperature applications.

The reinforcing agents may be present in the composition (C) in a total amount of greater than 15 wt. %, greater than 20 wt. % by weight, greater than 25 wt. % or greater than 30 wt. %, based on the total weight of the polymer composition (C). The reinforcing agents may be present in the composition (C) in a total amount of less than 65 wt. %, less than 60 wt. %, less than 55 wt. % or less than 50 wt. %, based on the total weight of the polymer composition (C).

The reinforcing filler may for example be present in the composition (C) in an amount ranging between 20 and 60 wt. %, for example between 30 and 50 wt. %, based on the total weight of the polyamide composition (C).

The composition (C) of the present invention may also comprise a toughener. A toughener is generally a low glass transition temperature ($T_g$) polymer, with a $T_g$ for example below room temperature, below 0°C or even below -25°C. As a result of its low $T_g$, the toughener are typically elastomeric at room temperature. Tougheners can be functionalized polymer backbones.

The polymer backbone of the toughener can be selected from elastomeric backbones comprising polyethylenes and copolymers thereof, e.g. ethylene-butene; ethylene-octene; polypropylenes and copolymers thereof; polybutenes; polyisoprenes; ethylene-propylene-rubbers (EPR); ethylene-propylene-diene monomer rubbers (EPDM); ethylene-acrylate rubbers; butadiene-acrylonitrile rubbers, ethylene-acrylic acid (EAA), ethylene-vinylacetate (EVA); acrylonitrile-butadiene-styrene rubbers (ABS), block copolymers styrene ethylene butadiene styrene (SEBS); block copolymers styrene butadiene styrene (SBS); core-shell elastomers of methacrylate-butadiene-styrene (MBS) type, or mixture of

one or more of the above.

When the toughener is functionalized, the functionalization of the backbone can result from the copolymerization of monomers which include the functionalization or from the grafting of the polymer backbone with a further component.

Specific examples of functionalized tougheners are notably terpolymers of ethylene, acrylic ester and glycidyl methacrylate, copolymers of ethylene and butyl ester acrylate; copolymers of ethylene, butyl ester acrylate and glycidyl methacrylate; ethylene-maleic anhydride copolymers; EPR grafted with maleic anhydride; maleimide copolymers grafted with maleic anhydride; SEBS copolymers grafted with maleic anhydride; styreneacrylonitrile copolymers grafted with maleic anhydride; ABS copolymers grafted with maleic anhydride.

The toughener may be present in the composition (C) in a total amount of greater than 1 wt. %, greater than 2 wt. % or greater than 3 wt. %, based on the total weight of the composition (C). The toughener may be present in the composition (C) in a total amount of less than 30 wt. %, less than 20 wt. %, less than 15 wt. % or less than 10 wt. %, based on the total weight of the polymer composition (C).

The composition (C) may also comprise other conventional additives commonly used in the art, including plasticizers, colorants, pigments (e.g. black pigments such as carbon black and nigrosine), antistatic agents, dyes, lubricants (e.g. linear low density polyethylene, calcium or magnesium stearate or sodium montanate), thermal stabilizers, light stabilizers, flame retardants, nucleating agents and antioxidants.

The composition (C) may also comprise one or more other polymers, preferably polyamides different from the polyamide of the present invention. Mention can be made notably of semi-crystalline or amorphous polyamides, such as aliphatic polyamides, semi-aromatic polyamides, and more generally the polyamides obtained by polycondensation between an aromatic or aliphatic saturated diacid and an aliphatic saturated or aromatic primary diamine, a lactam, an amino-acid or a mixture of these different monomers.

Preparation of the polyamide composition (C)

The invention further pertains to a method of making the composition (C) as above detailed, said method comprising melt-blending the polyamide and the specific components, e.g. a filler, a toughener, a stabilizer, and of any other optional additives.

Any melt-blending method may be used for mixing polymeric ingredients and non-polymeric ingredients in the context of the present invention. For example, polymeric ingredients and non-polymeric ingredients may be fed into a melt mixer, such as single screw extruder or twin screw extruder, agitator, single screw or twin screw kneader, or Banbury mixer, and the addition step may be addition of all ingredients at once or gradual addition in batches. When the polymeric ingredient and non-polymeric ingredient are gradually added in batches, a part of the polymeric ingredients and/or non-polymeric ingredients is first added, and then is melt-mixed with the remaining polymeric ingredients and non-polymeric ingredients that are subsequently added, until an adequately mixed composition is obtained. If a reinforcing agent presents a long physical shape (for example, a long glass fiber), drawing extrusion molding may be used to prepare a reinforced composition.

Articles and applications

The present invention also relates to articles comprising the polyamide described above and to articles comprising the polyamide composition (C) described above.

The article can notably be used in automotive applications, for example in air induction systems, cooling and heating systems, drivetrain systems and fuel systems. The article can also be used in LED packaging, mobile electronics, oil and gas applications and plumbing. Examples of electric and electronics devices are connectors, contactors and switches. The copolyamide may also be used as a gas barrier material for packaging applications, in mono or multilayer articles.

The article can be molded from the polyamide or polyamide composition (C) of the present invention, by any process adapted to thermoplastics, e.g. extrusion, injection molding, blow molding, rotomolding or compression molding.

The article can be printed from the polyamide or polyamide composition (C) of the present invention, by a process comprising a step of extrusion of the material, which is for example in the form of a filament, or comprising a step of laser sintering of the material, which is in this case in the form of a powder.

The present invention also relates to a method for manufacturing a three-dimensional (3D) object with an additive manufacturing system, comprising :

- providing a part material comprising the polyamide or polyamide composition (C) of the present invention, and
- printing layers of the three-dimensional object from the part material.

The polyamide or polyamide composition (C) can therefore be in the form of a thread or a filament to be used

in a process of 3D printing, e.g. Fused Filament Fabrication, also known as Fused Deposition Modelling (FDM).

The polyamide or polyamide composition (C) can also be in the form of a powder, for example a substantially spherical powder, to be used in a process of 3D printing, e.g. Selective Laser Sintering (SLS).

Use of the polyamides, composition (C) and articles

The present invention relates to the use of the above-described copolyamides, composition (C) or articles in air induction systems, cooling and heating systems, drivetrain systems and fuel systems or in mobile electronics, for example in a mobile electronic device.

The present invention also relates to the use of the above-described copolyamides or composition (C) for 3D printing an object.

## Examples

### Raw materials

11-Aminoundecanoic acid (Fisher Scientific)

3-AEBa : 3-(2-aminoethyl)benzoic acid prepared according to the following process. A solution of 2.0 g of 3-(Trifluoromethyl)phenylacetonitrile (Sigma Aldrich) in 5 mL of ether was added dropwise to a solution of 0.5 g of lithium aluminum hydride in 20 mL of ether, while cooling at 0°C. The mixture was then stirred at room temperature for 4 hours and then quenched by sequential addition of 0.5 ml of water, 0.5 ml of 15 % sodium hydroxide solution and 1.5 mL of water. The mixture was filtered and the filtrate dried over magnesium sulfate. The filtered solution was acidified with a 1N hydrogen chloride solution in ether and the solid which precipitated was collected to give 2-(3-trifluoromethylphenyl) ethyl amine hydrochloride. 1.38 g of 2-(3-trifluoromethylphenyl) ethyl amine hydrochloride was heated to 100°C in 3.5 g concentrated sulfuric acid for 3 hours. The cooled solution was diluted with 100 mL of ether and the resulting precipitate collected to give 3-(2-aminoethyl)-benzoic acid as the sulfate salt. The so-obtaned salt product was then dissolved in 10 mL water and 1N sodium hydroxide solution was added to bring the pH up to 7.

11-Aminoundecanoic acid (Fisher Scientific)

### Polyamides preparation

The polyamides of the present invention were prepared according to a similar process in an electrically-heated autoclave reactor equipped with a distillate line fitted with a pressure regulation valve. In the preparation of example 2, the reactor was charged with 0.552 g (3.34 mmol) of 3-AEBa, 0.119 g (0.59 mmol) of 11 -aminoundecanoic acid and 1 g of deionized water. The reactor was sealed, the pressure release valve was set to 17 bar and the reaction mixture was heated to 285°C. The pressure was reduced to atmospheric and the temperature was increased to 300°C. The reaction mixture was kept at 300°C for 15 min and then cooled down to 200°C within 1 hour and then to room temperature. The obtained products were further polymerized for 4 hours at 210°C.

### Testing

Thermal transitions (Tg, Tm)

The glass transition and melting temperatures of the various copolyamides were measured using differential scanning calorimetry according to ASTM D3418 employing a heating and cooling rate of 20°C/min. Three scans were used for each DSC test: a first heat up to 340°C, followed by a first cool down to 30°C, followed by a second heat up to 350°C. The Tg and the Tm were determined from the second heat up. The glass transition and melting temperatures are tabulated in Table 1 below.

Table 1 - mol. %

| | Ex 1 | Ex 2 |
|---|---|---|
| 3-AEBa | 100 | 85 |
| 11-Aminoundecanoic acid | - | 15 |

(continued)

| | Ex 1 | Ex 2 |
|---|---|---|
| | Glass Transition and Melting temperatures | |
| Tg (°C) | 139 | 111 |
| Tm (°C) | 234 | 236 |

Polyamides derived from 3-AEBa present a Tm which is much lower than polyamides derived from 3-(aminomethyl)benzoic acid (Tm= 346°C as described in US 3,438,948). This result is surprising : based on the Tm of 223°C of PA 6, which differs from PA 5 by only one methylene $-CH_2$-and has a Tm of 260°C, one would expect a much lower reduction of melting temperature. The polyamide of example 1 has a Tm similar to the melting temperature of the commercially available semi-aromatic MXD6 (Tm=243°C, homopolyamide obtained by reaction of adipic acid with meta-xylylene diamine), but exhibits a Tg significantly higher than MXD6. This makes the polyamides of the present invention well-suited for applications that require a high modulus at the temperature of use like in automotive applications where the temperature is usually above 100°C under-the-hood.

Surprisingly, the copolymerization of 15 mol. % 11-undecanoic acid with 85 mol. % 3-AEBa does not impact its melting point, but its Tg is much lower, which is quite unusual for copolyamides.

## Claims

1. A polyamide, having the following formula (I) :

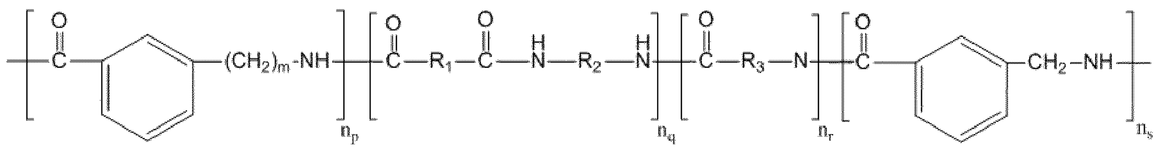

(I)

wherein :

$n_p$, $n_q$, $n_r$ and $n_s$ are respectively the mole % of each recurring units p, q, r and s; recurring units p, q, r and s are arranged in blocks, in alternation or randomly;

$$n_p + n_q + n_r + n_s = 100;$$

$$1 \leq n_p \leq 100;$$

$$1 < m \leq 20;$$

$R_1$ is selected from the group consisting of a bond, a $C_1$-$C_{15}$ alkyl and a $C_6$-$C_{30}$ aryl, optionally comprising one or more heteroatoms and optionally substituted with one or more substituents selected from the group consisting of halogen, hydroxy, $C_1$-$C_6$ alkoxy, $C_1$-$C_6$ alkylthio, $C_1$-$C_6$ acyl, formyl, cyano, C6-C15 aryloxy and $C_6$-$C_{15}$ aryl; $R_2$ is selected from the group consisting of a $C_1$-$C_{20}$ alkyl and a $C_6$-$C_{30}$ aryl, optionally comprising one or more heteroatoms and optionally substituted with one or more substituents selected from the group consisting of halogen, hydroxyl, $C_1$-$C_6$ alkoxy, $C_1$-$C_6$ alkylthio, $C_1$-$C_6$ acyl, formyl, cyano, C6-C15 aryloxy and $C_6$-$C_{15}$ aryl; and $R_3$ is selected from the group consisting of a $C_2$-$C_{20}$ alkyl and a $C_6$-$C_{30}$ aryl, optionally comprising one or more heteroatoms and optionally substituted with one or more substituent selected from the group consisting of halogen, hydroxy, $C_1$-$C_6$ alkoxy, $C_1$-$C_6$ alkylthio, $C_1$-$C_6$ acyl, formyl, cyano, C6-C15 aryloxy and $C_6$-$C_{15}$ aryl.

**2.** The polyamide of claim 1, wherein :

$R_1$ is selected from the group consisting of a $C_4$-$C_{10}$ alkyl and a $C_6$-$C_{12}$ aryl, optionally substituted with one or more substituents selected from the group consisting of halogen, hydroxy, $C_1$-$C_6$ alkoxy, $C_1$-$C_6$ alkylthio, $C_1$-$C_6$ acyl, formyl, cyano, $C_6$-$C_{15}$ aryloxy and $C_6$-$C_{15}$ aryl;
$R_2$ is selected from the group consisting of a $C_4$-$C_{12}$ alkyl and a $C_6$-$C_{12}$ aryl, optionally comprising one or more heteroatoms; and/or
$R_3$ is selected from the group consisting of a linear or branched $C_2$-$C_{20}$ alkyl, optionally comprising one or more heteroatoms and optionally substituted with one or more substituent selected from the group consisting of halogen, hydroxy, $C_1$-$C_6$ alkoxy, $C_1$-$C_6$ alkylthio, $C_1$-$C_6$ acyl, formyl, cyano, C6-C15 aryloxy and $C_6$-$C_{15}$ aryl.

**3.** The polyamide of claim 1 or 2, wherein the copolyamide is the condensation product of a mixture comprising :

- at least 1 mol. % of 3-(aminoalkyl)benzoic acid (3-AABa) of formula (II) or derivative thereof:

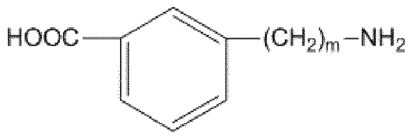

(II)

wherein
1 < m ≤ 20, preferably 1 < m ≤ 10, more preferably m = 2 or 3 and at least one of the component selected from the group consisting of:

- at least one dicarboxylic acid component or derivative thereof, and at least one diamine component,
- at least one aminocarboxylic acid, and/or
- at least one lactam.

**4.** The polyamide of any one of claims 1-3, wherein the polyamide is the condensation product of a mixture comprising :

- at least 1 mol. % of 3-(aminoalkyl)benzoic acid (3-AABa) of formula (II) or derivative thereof,
- a dicarboxylic acid component selected from the group consisting of adipic acid, azelaic acid, sebacic acid, isophthalic acid, terephthalic acid, 2,6-naphthalene dicarboxylic acid, 4,4'-bibenzoic acid, 5-hydroxyisophthalic acid, 5-sulfophthalic acid, and mixture thereof, and
- a diamine component selected from the group consisting of 1,4-diaminobutane, 1,5-diamonopentane, 2-methyl-1,5diaminopentane, hexamethylenediamine, 1,9-diaminononane, 2-methyl-1,8-diaminooctoane, 1,10-diaminedecane, $H_2N$-$(CH_2)_3$-O-$(CH_2)_2$-O$(CH_2)_3$-$NH_2$, *m*-xylylene diamine, p-xylylene and mixture thereof.

**5.** The polyamide of any one of claims 1-4, wherein the polyamide is the condensation product of a mixture comprising :

- at least 1 mol. % of 3-(aminoalkyl)benzoic acid (3-AABa) of formula (II) or derivative thereof,
- a dicarboxylic acid component selected from the group consisting of adipic acid, terephthalic acid, isopthalic acid and mixture thereof, and
- a diamine component selected from the group consisting of hexamethylenediamine, *m*-xylylene diamine, 1,10-decamethylene diamine and mixture thereof.

**6.** The polyamide of any one of claims 1-3, wherein the polyamide is the condensation product of a mixture comprising :

- at least 1 mol. % of 3-(aminoalkyl)benzoic acid (3-AABa) of formula (II) or derivative thereof, and
- at least one lactam selected from the group consisting of caprolactam, dodecanolactam and mixture thereof.

**7.** The polyamide of any one of the preceding claims, wherein the polyamide is such that: $50 \leq n_p \leq 100$, preferably $60 \leq n_p \leq 100$, more preferably $70 \leq n_p \leq 100$.

**8.** The polyamide of any one of the preceding claims, wherein the polyamide has a glass transition temperature of at

least 100°C, as determined according to ASTM D3418.

**9.** A polyamide composition (C), comprising :

- at least one polyamide according to any one of claims 1-8,
- at one least one of components selected from the group consisting of reinforcing agents, tougheners, plasticizers, colorants, pigments, antistatic agents, dyes, lubricants, thermal stabilizers, light stabilizers, flame retardants, nucleating agents and antioxidants.

**10.** An article comprising the polyamide of any one of claims 1-8 or the composition (C) of claim 9.

**11.** Use of the article of claim 10 in air induction systems, cooling and heating systems, drivetrain systems and fuel systems.

**12.** Use of the article of claim 10 in mobile electronics, for example in a mobile electronic device.

**13.** A method for manufacturing a three-dimensional (3D) object with an additive manufacturing system, comprising :

- providing a part material comprising the polyamide of any one of claims 1-8 or the composition (C) of claim 9, and
- printing layers of the three-dimensional object from the part material.

**Patentansprüche**

**1.** Polyamid mit der folgenden Formel (I):

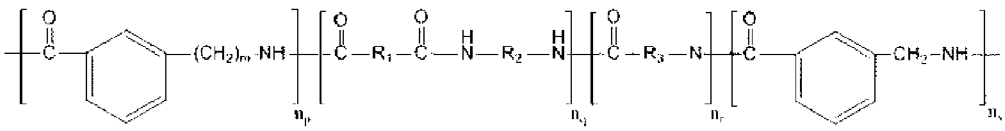

(I)

wobei:

$n_p$, $n_q$, $n_r$ und $n_s$ jeweils die Mol% von jeden sich wiederholenden Einheiten p, q, r und s sind;
die sich wiederholenden Einheiten p, q, r und s in Blöcken alternierend oder statistisch angeordnet sind;

$$n_p + n_q + n_r + n_s = 100;$$

$$1 \leq n_p \leq 100;$$

$$1 < m \leq 20;$$

$R_1$ ausgewählt ist aus der Gruppe bestehend aus einer Bindung, einem $C_1$-$C_{15}$-Alkyl und einem $C_6$-$C_{30}$-Aryl, gegebenenfalls umfassend ein oder mehrere Heteroatome und gegebenenfalls substituiert mit einem oder mehreren Substituenten ausgewählt aus der Gruppe bestehend aus Halogen, Hydroxy, $C_1$-$C_6$-Alkoxy, $C_1$-$C_6$-Alkylthio, $C_1$-$C_6$-Acyl, Formyl, Cyano, $C_6$-$C_{15}$-Aryloxy und $C_6$-$C_{15}$-Aryl;
$R_2$ ausgewählt ist aus der Gruppe bestehend aus einem $C_1$-$C_{20}$-Alkyl und einem $C_6$-$C_{30}$-Aryl, gegebenenfalls umfassend ein oder mehrere Heteroatome und gegebenenfalls substituiert mit einem oder mehreren Substituenten ausgewählt aus der Gruppe bestehend aus Halogen, Hydroxyl, $C_1$-$C_6$-Alkoxy, $C_1$-$C_6$-Alkylthio, $C_1$-$C_6$-Acyl, Formyl, Cyano, $C_6$-$C_{15}$-Aryloxy und $C_6$-$C_{15}$-Aryl; und
$R_3$ ausgewählt ist aus der Gruppe bestehend aus einem $C_2$-$C_{20}$-Alkyl und einem $C_6$-$C_{30}$-Aryl, gegebenenfalls umfassend ein oder mehrere Heteroatome und gegebenenfalls substituiert mit einem oder mehreren Substituenten ausgewählt aus der Gruppe bestehend aus Halogen, Hydroxy, $C_1$-$C_6$-Alkoxy, $C_1$-$C_6$-Alkylthio, $C_1$-$C_6$-Acyl,

Formyl, Cyano, $C_6$-$C_{15}$-Aryloxy und $C_6$-$C_{15}$-Aryl.

2. Polyamid nach Anspruch 1, wobei:

$R_1$ ausgewählt ist aus der Gruppe bestehend aus einem $C_4$-$C_{10}$-Alkyl und einem $C_6$-$C_{12}$-Aryl, gegebenenfalls substituiert mit einem oder mehreren Substituenten ausgewählt aus der Gruppe bestehend aus Halogen, Hydroxy, $C_1$-$C_6$-Alkoxy, $C_1$-$C_6$-Alkylthio, $C_1$-$C_6$-Acyl, Formyl, Cyano, $C_6$-$C_{15}$-Aryloxy und $C_6$-$C_{15}$-Aryl;
$R_2$ ausgewählt ist aus der Gruppe bestehend aus einem $C_4$-$C_{12}$-Alkyl und einem $C_6$-$C_{12}$-Aryl, gegebenenfalls umfassend ein oder mehrere Heteroatome; und/oder
$R_3$ ausgewählt ist aus der Gruppe bestehend aus einem linearen oder verzweigten $C_2$-$C_{20}$-Alkyl, gegebenenfalls umfassend ein oder mehrere Heteroatome und gegebenenfalls substituiert mit einem oder mehreren Substituenten ausgewählt aus der Gruppe bestehend aus Halogen, Hydroxy, $C_1$-$C_6$-Alkoxy, $C_1$-$C_6$-Alkylthio, $C_1$-$C_6$-Acyl, Formyl, Cyano, $C_6$-$C_{15}$-Aryloxy und $C_6$-$C_{15}$-Aryl.

3. Polyamid nach Anspruch 1 oder 2, wobei das Copolyamid das Kondensationsprodukt einer Mischung ist, umfassend:

- mindestens 1 Mol% 3-(Aminoalkyl)benzoesäure (3-AABa) der Formel (II) oder eines Derivats davon:

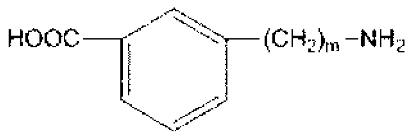

(II)

wobei:

1 < m ≤ 20, vorzugsweise 1 < m ≤ 10, bevorzugter m = 2 oder 3,
und mindestens eine von der Komponente ausgewählt aus der Gruppe bestehend aus:

- mindestens einer Dicarbonsäurekomponente oder einem Derivat davon, und mindestens einer Diaminkomponente,
- mindestens einer Aminocarbonsäure und/oder
- mindestens einem Lactam.

4. Polyamid nach einem der Ansprüche 1 bis 3, wobei das Polyamid das Kondensationsprodukt einer Mischung ist, umfassend:

- mindestens 1 Mol% 3-(Aminoalkyl)benzoesäure (3-AABa) der Formel (II) oder eines Derivats davon,
- einer Dicarbonsäurekomponente ausgewählt aus der Gruppe bestehend aus Adipinsäure, Azelainsäure, Sebacinsäure, Isophthalsäure, Terephthalsäure, 2,6-Naphthalindicarbonsäure, 4,4'-Bibenzoesäure, 5-Hydroxyisophthalsäure, 5-Sulfophthalsäure und Mischungen davon, und
- einer Diaminkomponente ausgewählt aus der Gruppe bestehend aus 1,4-Diaminobutan, 1,5-Diaminopentan, 2-Methyl-1,5-diaminopentan, Hexamethylendiamin, 1,9-Diaminononan, 2-Methyl-1,8-diaminooctan, 1,10-Diamindecan, $H_2N$-$(CH_2)_3$-O-$(CH_2)_2$-O$(CH_2)_3$-$NH_2$, *m*-Xylylendiamin, p-Xylylen und Mischungen davon.

5. Polyamid nach einem der Ansprüche 1 bis 4, wobei das Polyamid das Kondensationsprodukt einer Mischung ist, umfassend:

- mindestens 1 Mol% 3-(Aminoalkyl)benzoesäure (3-AABa) der Formel (II) oder eines Derivats davon,
- einer Dicarbonsäurekomponente ausgewählt aus der Gruppe bestehend aus Adipinsäure, Terephthalsäure, Isophthalsäure und Mischungen davon, und
- einer Diaminkomponente ausgewählt aus der Gruppe bestehend aus Hexamethylendiamin, m-Xylylendiamin, 1,10-Decamethylendiamin und Mischungen davon.

6. Polyamid nach einem der Ansprüche 1 bis 3, wobei das Polyamid das Kondensationsprodukt einer Mischung ist, umfassend:

- mindestens 1 Mol% 3-(Aminoalkyl)benzoesäure (3-AABa) der Formel (II) oder eines Derivats davon, und
- mindestens ein Lactam ausgewählt aus der Gruppe bestehend aus Caprolactam, Dodecanolactam und Mischungen davon.

**7.** Polyamid nach einem der vorhergehenden Ansprüche, wobei das Polyamid derart ist, dass: $50 \leq n_p \leq 100$, vorzugsweise $60 \leq n_p \leq 100$, bevorzugter $70 \leq n_p \leq 100$.

**8.** Polyamid nach einem der vorhergehenden Ansprüche, wobei das Polyamid eine Glasübergangstemperatur von mindestens 100 °C aufweist, ermittelt gemäß ASTM D3418.

**9.** Polyamidzusammensetzung (C), umfassend:

- mindestens ein Polyamid gemäß einem der Ansprüche 1 bis 8,
- mindestens eine der Komponenten ausgewählt aus der Gruppe bestehend aus Verstärkungsmitteln Zähmachern, Weichmachern, Färbungsmitteln, Pigmenten, Antistatikmitteln, Farbstoffen, Schmiermitteln, Wärmestabilisatoren, Lichtstabilisatoren, Flammhemmern, Kristallkeimbildnern und Antioxidantien.

**10.** Artikel, umfassend das Polyamid gemäß einem der Ansprüche 1 bis 8 oder die Zusammensetzung (C) gemäß Anspruch 9.

**11.** Verwendung des Artikels nach Anspruch 10 in Luftinduktionssystemen, Kühl- und Heizsystemen, Antriebstechniksystemen und Brennstoffsystemen.

**12.** Verwendung des Artikels nach Anspruch 10 in Mobilelektronik, beispielsweise in einem mobilen elektronischen Gerät.

**13.** Verfahren zur Fertigung eines dreidimensionalen (3D) Objekts mit einem additiven Fertigungssystem, umfassend:

- Bereitstellen eines Teilematerials, welches das Polyamid gemäß einem der Ansprüche 1 bis 8 oder die Zusammensetzung (C) gemäß Anspruch 9 umfasst, und
- Drucken von Schichten des dreidimensionalen Objekts aus dem Teilematerial.

**Revendications**

**1.** Polyamide, possédant la formule suivante (I) :

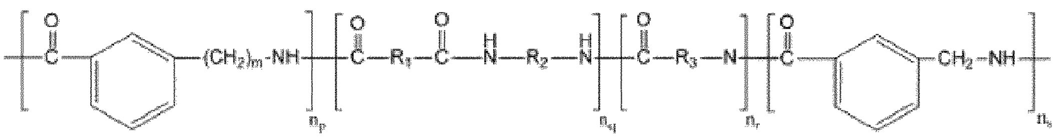

(I)

$n_p$, $n_q$, $n_r$ et $n_s$ étant respectivement les % en moles de chaque motif répétitif p, q, r et s ;
les motifs répétitifs p, q, r et s étant agencés en blocs, en alternance ou de manière aléatoire ;

$$n_p + n_q + n_r + n_s = 100 ;$$

$$1 \leq n_p \leq 100 ;$$

$$1 < m \leq 20 ;$$

$R_1$ étant choisi le groupe constitué par une liaison, un $C_1$-$C_{15}$ alkyle et un $C_6$-$C_{30}$ aryle, éventuellement com-

prenant un ou plusieurs hétéroatomes et éventuellement substitué par un ou plusieurs substituants choisis dans le groupe constitué par halogène, hydroxy, $C_1$-$C_6$ alcoxy, $C_1$-$C_6$ alkylthio, $C_1$-$C_6$ acyle, formyle, cyano, $C_6$-$C_{15}$ aryloxy et $C_6$-$C_{15}$ aryle ;

$R_2$ étant choisi le groupe constitué par un $C_1$-$C_{20}$ alkyle et un $C_6$-$C_{30}$ aryle, éventuellement comprenant un ou plusieurs hétéroatomes et éventuellement substitué par un ou plusieurs substituants choisis dans le groupe constitué par halogène, hydroxyle, $C_1$-$C_6$ alcoxy, $C_1$-$C_6$ alkylthio, $C_1$-$C_6$ acyle, formyle, cyano, $C_6$-$C_{15}$ aryloxy et $C_6$-$C_{15}$ aryle ; et

$R_3$ étant choisi le groupe constitué par un $C_2$-$C_{20}$ alkyle et un $C_6$-$C_{30}$ aryle, éventuellement comprenant un ou plusieurs hétéroatomes et éventuellement substitué par un ou plusieurs substituants choisis dans le groupe constitué par halogène, hydroxy, $C_1$-$C_6$ alcoxy, $C_1$-$C_6$ alkylthio, $C_1$-$C_6$ acyle, formyle, cyano, $C_6$-$C_{15}$ aryloxy et $C_6$-$C_{15}$ aryle.

**2.** Polyamide selon la revendication 1,

$R_1$ étant choisi le groupe constitué par un $C_4$-$C_{10}$ alkyle et un $C_6$-$C_{12}$ aryle, éventuellement substitué par un ou plusieurs substituants choisis dans le groupe constitué par halogène, hydroxy, $C_1$-$C_6$ alcoxy, $C_1$-$C_6$ alkylthio, $C_1$-$C_6$ acyle, formyle, cyano, $C_6$-$C_{15}$ aryloxy et $C_6$-$C_{15}$ aryle ;

$R_2$ étant choisi le groupe constitué par un $C_4$-$C_{12}$ alkyle et un $C_6$-$C_{12}$ aryle, éventuellement comprenant un ou plusieurs hétéroatomes ; et/ou $R_3$ étant choisi le groupe constitué par un $C_2$-$C_{20}$ alkyle linéaire ou ramifié, éventuellement comprenant un ou plusieurs hétéroatomes et éventuellement substitué par un ou plusieurs substituants choisis dans le groupe constitué par halogène, hydroxy, $C_1$-$C_6$ alcoxy, $C_1$-$C_6$ alkylthio, $C_1$-$C_6$ acyle, formyle, cyano, $C_6$-$C_{15}$ aryloxy et $C_6$-$C_{15}$ aryle.

**3.** Polyamide selon la revendication 1 ou 2, le copolyamide étant le produit de condensation d'un mélange comprenant :

- au moins 1 % en moles d'acide 3-(aminoalkyl)benzoïque (3-AABa) de formule (II) ou d'un dérivé correspondant ;

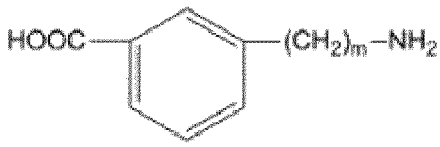

(II)

$1 < m \leq 20$, préférablement $1 < m \leq 10$, plus préférablement m = 2 ou 3
et au moins un composant choisi dans le groupe constitué par :

- au moins un composant de type acide dicarboxylique ou un dérivé correspondant, et au moins un composant de type diamine,
- au moins un acide aminocarboxylique, et/ou
- au moins un lactame.

**4.** Polyamide selon l'une quelconque des revendications 1 à 3, le polyamide étant le produit de condensation d'un mélange comprenant :

- au moins 1 % en moles d'acide 3-(aminoalkyl)benzoïque (3-AABa) de formule (II) ou d'un dérivé correspondant,
- un composant de type acide dicarboxylique choisi dans le groupe constitué par l'acide adipique, l'acide azélaïque, l'acide sébacique, l'acide isophtalique, l'acide téréphtalique, l'acide 2,6-naphtalènedicarboxylique, l'acide 4,4'-bibenzoïque, l'acide 5-hydroxyisophtalique, l'acide 5-sulfophtalique, et un mélange correspondant, et
- un composant de type diamine choisi dans le groupe constitué par 1,4-diaminobutane, 1,5-diaminopentane, 2-méthyl-1,5-diaminopentane, hexaméthylènediamine, 1,9-diaminononane, 2-méthyl-1,8-diaminooctoane, 1,10-diaminedécane, $H_2N$-$(CH_2)_3$-O-$(CH_2)_2$-$O(CH_2)_3$-$NH_2$, *m*-xylylènediamine, p-xylylène et un mélange correspondant.

**5.** Polyamide selon l'une quelconque des revendications 1 à 4, le polyamide étant le produit de condensation d'un mélange comprenant :

- au moins 1 % en moles d'acide 3-(aminoalkyl)benzoïque (3-AABa) de formule (II) ou d'un dérivé correspondant,
- un composant de type acide dicarboxylique choisi dans le groupe constitué par l'acide adipique, l'acide téréphtalique, l'acide isophtalique et un mélange correspondant, et
- un composant de type diamine choisi dans le groupe constitué par hexaméthylènediamine, m-xylylènediamine, 1,10-décaméthylènediamine et un mélange correspondant.

**6.** Polyamide selon l'une quelconque des revendications 1 à 3, le polyamide étant le produit de condensation d'un mélange comprenant :

- au moins 1 % en moles d'acide 3-(aminoalkyl)benzoïque (3-AABa) de formule (II) ou d'un dérivé correspondant, et
- au moins un lactame choisi dans le groupe constitué par caprolactame, dodécanolactame et un mélange correspondant.

**7.** Polyamide selon l'une quelconque des revendications précédentes, le polyamide étant tel que : $50 \leq n_p \leq 100$, préférablement $60 \leq n_p \leq 100$, plus préférablement $70 \leq n_p \leq 100$.

**8.** Polyamide selon l'une quelconque des revendications précédentes, le polyamide possédant une température de transition vitreuse d'au moins 100 °C, telle que déterminée selon la norme ASTM D3418.

**9.** Composition (C) de polyamide, comprenant :

- au moins un polyamide selon l'une quelconque des revendications 1 à 8,
- au moins l'un parmi les composants choisis dans le groupe constitué par des agents de renforcement, des agents solidifiants, des plastifiants, des matières colorantes, des pigments, des agents antistatiques, des colorants, des lubrifiants, des stabilisants thermiques, des photostabilisants, des retardateurs de flamme, des agents de nucléation et des antioxydants.

**10.** Article comprenant le polyamide selon l'une quelconque des revendications 1 à 8 ou la composition (C) selon la revendication 9.

**11.** Utilisation de l'article selon la revendication 10 dans des systèmes d'induction d'air, des systèmes de refroidissement et de chauffage, des systèmes de chaîne cinématique et des systèmes de carburant.

**12.** Utilisation de l'article selon la revendication 10 dans l'électronique mobile, par exemple dans un dispositif électronique mobile.

**13.** Procédé pour la fabrication d'un objet tridimensionnel (3D) avec un système de fabrication additive, comprenant :

- la mise à disposition d'un matériau de pièce comprenant le polyamide selon l'une quelconque des revendications 1 à 8 ou la composition (C) selon la revendication 9, et
- l'impression de couches de l'objet tridimensionnel à partir du matériau de pièce.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5886994 A
- CN 2016108997 W
- US 3438948 A


### Non-patent literature cited in the description


- **JOHN MURPHY.** Additives for Plastics Handbook. 43-48